# EUROPEAN PATENT SPECIFICATION

(11) **EP 0 913 238 B1**
(45) Date of publication and mention of the grant of the patent: **02.05.2003**
(21) Application number: 98203639.4
(22) Date of filing: 28.10.1998
(51) Int. Cl.: B28B 21/94, F16L 58/10, F16L 9/08

(54) **Method for producing a polyurethane pipe inside a concrete pipe, and composite product thus obtained**
Verfahren zum Herstellen eines Rohres aus Polyurethan in einem Betonrohr und durch das Verfahren hergestelltes Verbundprodukt
Méthode pour la fabrication d'un tuyau en polyuréthane à l'intérieur d'un tuyau en béton et produit composite ainsi obtenu

(30) Priority: 03.11.1997 IT MI972463
(43) Date of publication of application: 06.05.1999
(73) Proprietor: CO. PRE.M costruzioni Prefabbricate Modulari s.r.l., 24040 Bottanuco (Bergamo) (IT); Tema Technopolymers S.r.l., 24040 Pontirolo Nuovo (Bergamo) (IT)
(72) Inventor: Montagni, Pierlorenzo, 24128 Bergamo (IT); Auci, Pietro, 24040 Zingonia di Verdellino, Bergamo (IT)
(74) Representative: Marchi, Massimo

(56) References cited:
- WO-A-95/06088
- DE-B- 1 267 577
- FR-A- 1 321 863
- FR-A- 1 416 907
- GB-A- 945 031
- GB-A- 950 664
- US-A- 3 177 902
- US-A- 4 559 239
- US-A- 5 051 223
- US-A- 5 389 692
- PATENT ABSTRACTS OF JAPAN vol. 016, no. 446 (M-1311), 17 September 1992 & JP 04 156307 A (NIPPON HUME PIPE CO LTD;OTHERS: 01), 28 May 1992

## Description

The present invention relates to a method for producing a polyurethane pipe inside a concrete pipe, and to a composite product thus obtained.

For practical purposes, the said composite product can also be considered as a polyurethane pipe reinforced with a concrete outer coating.

It is known that concrete pipes are widely used in the construction of civil and industrial sewers and that certain production techniques give a product whose internal surface is coarse and porous and that this is the main cause of corrosion and rapid degradation of the pipes, especially in the presence of corrosive agents.

GB 1,498,412 describes a concrete pipe which is lined with a protective coating comprising two layers of reinforced leakproof coating joined together by an intermediate layer of glass fibre fabric, in which the outermost layer of the said coating is applied to the inner face of the said concrete pipe. The leakproof layers consist of an epoxy resin containing a small proportion of tar.

Besides involving an expensive assembly method, this pipe has the drawback of not improving the mechanical strength of the concrete pipe against external forces, as a result of which the said lining is not firmly secured to the concrete pipe.

EP-0,386,428, in the name of Assotubi Ecologica s.r.l., describes a pipe having structural properties similar to those of the pipe described in the abovementioned GB patent 1,498,412, but whose main aim is to improve the pipe production method by using an inner pipe die having a movable section and movable flanging on which a coating of glass wool is placed beforehand. After inserting the said die in the concrete pipe, a resin is injected into the space between the die and the concrete pipe, and, once this resin has dried, the movable parts of the die are dismantled, the flanging is detached and the die is removed. Bisphenolic and isophthalic resins are mentioned as preferred resins.

However, the company Assotubi acknowledges that the said process is laborious and expensive. Thus, in Italian patent application MI 95/A 002547 of 05.12.1995, Assotubi proposed to improve the abovementioned process by using a frustoconical die. However, this method too is laborious and expensive.

However, the abovementioned processes do not allow the polymer material to penetrate sufficiently into the pores of the concrete to create the necessary solid attachment between the layer of polymer material and the layer of concrete, being limited to mere surface adhesion.

US 5,059,671 describes a process for obtaining a solvent-free elastomeric urethane, which involves the high-pressure spraying, for example onto a pipe, of a mixture of two components in which (a) one is a partial prepolymer having a high NCO/OH molar ratio, prepared from an organic polyisocyanate and from a polytetramethylene glycol ether (PTMGE) with a molecular weight of between 400 and 2000, and (b) the other is a resin containing PTMGE, a specific chain extender and an organobismuth catalyst.

Besides involving relatively long application times, this process too has the drawback of not allowing the polymer material to penetrate deeply into the pores of the concrete and thus create a solid attachment between the layer of polymer material and the layer of concrete.

FR 1,321,863 relates to a conduit for liquids, such as a pipe, whose inner surface is coated with a protective layer, and to a process for manufacturing this conduit. More particularly, this document describes a process in which the components of an epoxy, polyester or urethane thermosetting resin are applied in the form of hot liquid to the inner surface of a tube made, for example, of asbestos cement, the said inner surface being heated to a temperature of 51-177°C, the said pipe being rotated in order to ensure correct dispersion of the resinous coating material, and this material then being converted into a solid substance by thermal and catalytic treatment.

The only polyurethane example illustrated (Example 5) includes the use of highly toxic components, which are applied at 140°C, in the form of an 0.5 mm thick liquid layer, while the inner surface of the asbestos cement pipe is itself also heated to 140°C. The final thickness of the polyurethane layer applied is not indicated, but will certainly be less than 0.5 mm. In practice, a layer of polyurethane varnish is applied to the inner surface of the asbestos cement pipe. In addition, this method involves considerable expenditure of heat energy.

US-A-5,051,223 relates to the production of a cement pipe on the inner surface of which is applied a liquid impregnation medium under pressure. That document points out that the liquid impregnation medium consists of a resin solution, but does not at any time specify which type of resin is used. The document furthermore does not point out whether the layer of resin applied is of uniform thickness, or how this may be obtained.

US-A-4,559,239 relates to a method for protecting or repairing cementious substrates. The method comprises the application of polyurethane precursors onto relatively new cement conduits, before these conduits have undergone any substantial degradation (column 2, lines 41-44). That document does not point out whether the layer of resin applied is of uniform thickness, or how this may be obtained.

Patent Abstract of Japan vol. 016, No. 446 (M-1311), 1992 relates to a method for applying a layer of synthetic resin, comprising a filler, by spraying onto the inner surface of a cement pipe which is rotated at low speed. After this application, the cement pipe is heated with hot air and the rotation is stopped when the resin and the filler are sufficiently cured. This method therefore also involves appreciable expenditure of heat energy.

WO 95/06088 discloses a coating for a porous structural material wherein said coating consists of a first layer of foamed polyurethane adjacent to the material to be coated. A second layer of a non-foamed polyurethane may be applied onto said first layer.

Lastly, the methods described in FR 1,321,863, US-A-5,051,223, US-A-4,559,239 and Patent Abstract of Japan vol. 016, No. 446 (M-1311), 1992 do not mention any enhancements in the mechanical strength of the pipes treated, with respect to external loads.

The present invention proposes to overcome the abovementioned drawbacks by producing a polyurethane pipe which is firmly secured to the inside of a concrete pipe, by applying, to the inner surface of a concrete pipe, at least one layer of polyurethane using a method which is capable of permeating the concrete and thereby enhancing not only the resistance to corrosion and the flowability of liquids passing through it, but also the mechanical strength of the concrete pipe when subjected to loads, in particular to external loads bearing on pipes which are permanently buried, due to the ground itself, and loads of mobile type due, for example, to road traffic. At the same time, the method of the invention is also a process for reinforcing a polyurethane pipe with a concrete outer coating.

Thus, it is a first object of the present invention to provide a method for producing a polyurethane pipe which is firmly secured inside a concrete pipe, according to independent claim 1.

Hereinbelow in the present description and in the attached claims, the expression "ambient temperature" is used to indicate the temperature of the environment in which the said method is carried out. This temperature can range between 10 and 40°C, preferably between 10 and 30°C.

Preferably, the tube is rotated at a peripheral speed of between 1 and 20 m/sec. Typically, the said speed is between 2.5 and 10 m/sec, even more typically between 4 and 8 m/sec.

In step b), the amount of precursor mixture applied is preferably sufficient to form a solid polyurethane layer at least 3 mm in thickness, even more preferably at least 5 mm in thickness.

Preferably, the mixture of precursors of the said polyurethane is applied at ambient temperature.

Step c) is preferably carried out for a period of between 1 minute and 48 hours and at a peripheral speed within the range indicated above for step a).

Typically, the time is between 1 minute and 6 hours, even more preferably between 1 minute and 1 hour.

When it is desired to form further optional layers, step c) is generally carried out for a period of between 1 minute and 1 hour and at a peripheral speed of the concrete pipe of between 1 and 20 m/sec, depending on the desired thickness.

Typically, the time is between 1 and 30 minutes, even more preferably between 1 and 15 minutes.

The peripheral speed is, in turn, typically between 2.5 and 10 m/sec, even more preferably between 4 and 8 m/sec.

The step in which the first polyurethane layer intended to permeate the concrete is formed is particularly important when carrying out the present invention.

The mixture of precursors used to form the first layer will preferably be preselected on the basis of the following criteria:
a)it must be sufficiently fluid; and
b)it must not solidify before they have sufficiently permeated the pores of the concrete, but, once they have permeated the said pores, it must solidify fairly quickly so as to limit the production times and thus the production costs.

When the first layer does not need to penetrate deeply into the pores of the concrete, or when further optional layers are applied, the said mixtures will preferably be preselected such that they solidify fairly quickly once they have been applied.

In a preferred embodiment, the said first layer is formed from a mixture comprising at least one polyhydroxyl compound, a diisocyanate and a suitable catalyst, optionally in the presence of an adjuvant and a chain-extension compound, which forms a polyurethane in situ.

Examples of suitable polyhydroxyl compounds are adipic acid/butanediol, adipic acid/monoethylene glycol (MEG) and adipic acid/hexanediol polyesters, polycaprolactones, ethylene oxide or propylene oxide polyethers, polyethers obtained by polymerization of tetrahydrofuran containing hydroxyl groups, low molecular weight glycols such as, for example, dipropylene glycol, tripropylene glycol, tetrapropylene glycol and diethylene glycol, 1,3-, 1,4- and 2,3-butanediol, neopentyl glycol and the like.

Examples of suitable diisocyanates are 4,4'-diphenylmethane diisocyanate (MDI), 2,4-toluylene diisocyanate (TDI), 1,5-naphthalene diisocyanate (NDI), xylene hydrogenate diisocyanate (HXDI), xylene diisocyanate (XDI) and the like.

The catalyst can readily be chosen by a person skilled in the art, depending on the mixture of prepolymers used and on the desired rate of polymerization. Typical examples of suitable catalysts are Dadco 33LV from the company Air Product and LV 33. Typical examples of adjuvants are zeolites.

Examples of suitable chain extenders are monoethylene glycol, 1,4-butanediol, bismetahydroxy-ethoxybenzene and aromatic polyamines such as, for example, 4,4'-diaminobiphenyl, 2,3-, 3,4-, 2,4- and 2,6-diaminotoluene or mixtures thereof, 2,3-dimethyl-1,4-diaminonaphthalene, 3,3',5,5'-tetraethyl-4,4'-diaminodiphenyl ether and the like.

Inside the pipe, the differences between the various layers, which are preferably compact, can vary widely depending on the result which it is intended to achieve, such as, for example, abrasion strength, resistance to acids, resistance to bases, resistance to solvents, reduction of the coefficient of roughness, and the like.

The said further layers will preferably also consist of identical or different polymer materials, optionally comprising other materials such as, for example, stabilizers, organic or inorganic fillers, antifoaming agents, flame retardants and organic and inorganic pigments, in the form of powders, fibres, threads or fabrics. The use of pigments, in particular, is very useful in the case of a multilayer polymer pipe, since the method of the present invention is capable of producing coloured inner layers in different ways depending on their function, which makes it possible to evaluate which layer is most worn or damaged over time.

Even more preferably, the said further inner layers will consist of polymer materials having good mutual chemical affinity and thus perfect adhesion both to the first permeation layer and to each other, and also having coefficients of elasticity which are sufficiently homogeneous to ensure that all of the layers form a monolithic structure which enhances the mechanical strength of the concrete pipe, thus lined, with respect to loads.

The said further layers can also consist of polyurethanes identical to or different from those of the first layer, or other polymer materials such as epoxy, bisphenolic or isophthalic resins, which may or may not be filled with organic and inorganic fillers.

The composite product, comprising a pipe, in which at least one layer is made of a polyurethane, formed inside a concrete pipe by the method of the present invention has the following advantages:
- reduction of the coefficient of roughness, which goes from that of a concrete pipe to that of a pipe of PVC;
- resistance of the pipe to chemical attack by high concentrations of acids and/or bases within the effluent;
- excellent leakproofing both from the inside outwards and from the outside inwards. This is a fundamental characteristic for protecting the environment and is not one featured by pipes made of concrete alone which, given the intrinsic porosity of the material, allowed absorption and in leakproofing and watertightness tests;
- enhancement of mechanical properties. For example, an inner pipe according to the present invention, consisting of three layers of polyurethane and having a total thickness of 6 mm, substantially increases both the resistance to cracking and the breaking strength of a pipe of reinforced concrete of circular cross-section (diameter 800 mm) with cup-shaped ends, to standard prUNI E07.04.064.0 and belonging to resistance category II (deformation resistance to cracking 100 KN/m² and breaking deformation strength 140 KN/m²), thus. substantially improving the safety factors in the static calculation.

At the same time, compared with a pipe made from only polymer material, the composite product of the present invention has the advantage of reinforcing the inner polymer pipe with an outer layer of concrete.

The composite products obtained by the method of the present invention are novel. Typical examples of composite products according to the present invention are those in which the degree of penetration of the layer of polyurethane into the pores and discontinuities of the concrete is at least 1 mm and the polyurethane pipe formed inside the concrete pipe is at least 1 mm in thickness. Preferably, the said depth of penetration is at least 2 mm and even more preferably at least 3 mm.

Preferably, the density of the said inner pipe is at least 1,100 kg/m³. Needless to say, a person skilled in the art will take into account the fact that the said density can increase considerably when the said polymer material comprises organic and/or inorganic fillers. In these cases, the density of the layer can even be 3000 kg/m³ or more.

Thus, it is a further object of the present invention to provide a composite product comprising a concrete outer pipe and an inner pipe made of polymer material, characterized in that the said inner pipe is formed of at least a first layer of polyurethane, the said first layer being in contact with the inner surface of the said concrete pipe, being at least 2 mm in thickness and permeating the pores and discontinuities of the said concrete to a depth of at least 1 mm.

The said permeation, which is even visible to the naked eye when the pipe is sectioned, is preferably greater than 2 mm. Even more preferably, it is greater than 2.5 - 3.0 mm.

Characteristics and advantages of the invention will now be illustrated with reference to an embodiment represented by way of non-limiting example in the attached figures.

Fig. 1 shows a longitudinal section through a composite product according to the present invention.

Fig. 2 shows a cross-section of the composite product on a plane II-II of Fig. 1.

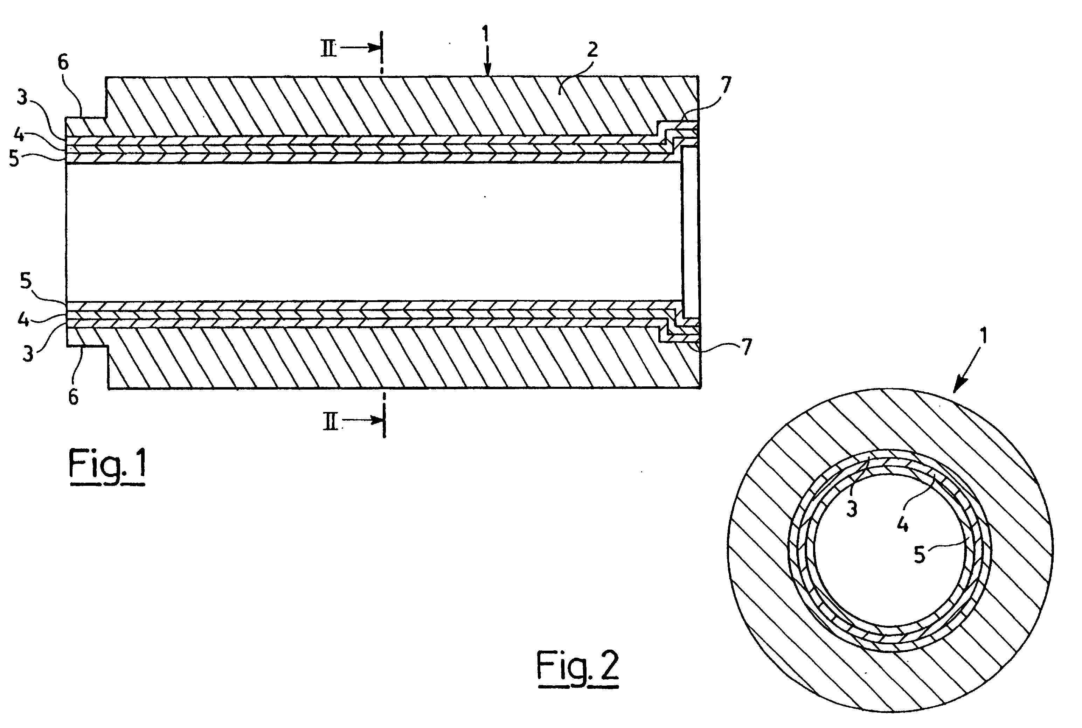

As can be seen from Figs. 1 and 2, the inner surface of a wall 2 of a concrete pipe 1 is firmly secured to an inner pipe formed of three layers 3, 4 and 5.

The layer 3 is the one which permeates the holes and pores in the concrete and is formed of a polyurethane. The layer 4 is an intermediate layer which adheres perfectly both to the layer 3 and to the layer 5 and preferably has the purpose of solidly binding the said layers together when one of them does not adhere very well to another. As already mentioned, this layer can also contain materials of high hardness and/or stabilizers, antifoaming agents, flame retardants, organic and inorganic fillers and organic and inorganic pigments in the form of powders, fibres, threads or fabrics. The layer 5 is a layer which, depending on the circumstances, besides improving the mechanical properties of the entire pipe, can be preselected for specific applications and can have a high degree of resistance to acids and/or bases and/or solvents. This layer can also serve to reduce the coefficient of roughness and/or to improve the abrasion resistance.

The ends 6 and 7 of the concrete pipe can themselves be lined with layers 3, 4 and 5 (not shown in the figure) by using suitable containing devices.

The following examples serve to illustrate the present invention without, however, limiting it in any way.

### EXAMPLE 1

A pipe of non-reinforced concrete of circular cross-section (diameter 500 mm) with cup-shaped ends, to standard UNI 9534 and belonging to resistance category II (breaking deformation strength 100 KN/m²), was inserted into a metal form having a centring and guidance system for fixing to a centrifuge such as, for example, a large-capacity lathe with bearing rollers.

The form containing the concrete pipe was fixed onto the lathe and the concrete pipe was rotated about its longitudinal axis at a peripheral speed of 2.5 m/sec. Once a peripheral speed of 6 m/sec was reached, an equal amount by weight of a composition A₁ [consisting of 81.27% by weight of a polyether with a hydroxyl number equal to 55-57, 14.63% by weight of 1,4-butanediol, 4.07% of zeolite and 0.041% by weight of catalyst LV 33] and a composition B₁ [consisting of 55% of 4,4'-diphenylmethane diisocyanate and a polyol with a hydroxyl number equal to 36-37] were poured into the pipe, using equipment consisting of pumps and pipes. The pipe was kept in rotation at a peripheral speed of 6 m/sec until the mixture had solidified. The inner pipe thus obtained was about 6 mm in thickness.

Other mixtures of precursors of polymer material which can be used to carry out the process described above are:
a) a mixture consisting of one part by weight of composition A₂ consisting of 57.9% by weight of a polyol with a hydroxyl number equal to 55-57, 38.6% by weight of a polyol with a hydroxyl number equal to 400-405, 1.15% by weight of catalyst LV 33, 0.29% by weight of antifoaming agent 066 from the company Huls e Capelli (Milan) and 2.05% by weight of a dye pigment such as Noreco (Rozzano, Milan) and Repi (Gorla Maggiore, Varese) and one part by weight of composition B₂ consisting of 100% by weight of 4,4'-diphenylmethane diisocyanate;
b) a mixture consisting of one part by weight of composition A₃ consisting of 29.37% by weight of a polyol with a hydroxyl number equal to 55-57, 19.53% by weight of a polyol with a hydroxyl number equal to 400-405, 0.217% by weight of catalyst LV 33, 1.67% of a dye pigment such as Noreco (Rozzano, Milan) and Repi (Gorla Maggiore, Varese), 0.15% by weight of the antifoaming agent 066 such as Zeolite from the company Bayer (Milan), 49.06% of quartz filler and 0.33 part by weight of a composition B₃ consisting of 100% by weight of 4,4'-diphenylmethane diisocyanate.

### EXAMPLE 2

Working in a similar manner, with suitable mechanical means, pipes of reinforced concrete of circular cross-section (diameter 800 mm) with cup-shaped ends, to standard prUNI E07.04.064.0 and belonging to resistance category II (deformation resistance to cracking 100 KN/m² and breaking deformation strength 140 KN/m²), and pipes of reinforced concrete of circular cross-section (diameter 1200 mm) with cup-shaped ends, to standard DIN 4035 and belonging to resistance category II (breaking deformation resistance 181 KN/m²) were used.

## Claims

1. Method for producing a polyurethane pipe (3) which is firmly secured inside a concrete pipe (1), by applying, to the inner surface (2) of the said concrete pipe, at least a first layer (3) of leakproofing polyurethane which is capable of permeating the pores of the concrete, this process comprising the phases of
a)rotating the said concrete pipe (1) about its longitudinal axis at ambient temperature;
b)introducing, into the said rotating pipe (1), a mixture of precursors of a polyurethane, in an amount which is sufficient to form a non-foamed solid layer (3) of polyurethane;
c)continuing the said rotation, at ambient temperature, at a speed and for a time which are sufficient to solidify the said mixture, **characterised in that** said non-foamed solid layer of polyurethane is of at least 2 mm in thickness, and that said mixture has a temperature of less than 65°C.

2. Method according to Claim 1, **characterized in that** the said pipe (1) is rotated at a peripheral speed of between 1 and 20 m/sec.

3. Method according to Claim 1 or 2, **characterized in that** the mixture of precursors of the said polyurethane is applied at ambient temperature.

4. Method according to any one of the preceding Claims 1 to 3, **characterized in that** the amount of the said precursor mixture is sufficient to form a solid polyurethane layer at least 3 mm in thickness.

5. Method according to any one of Claims 1 to 4, **characterized in that** the said first polymer layer (3) of polyurethane is formed from a mixture comprising at least one polyhydroxyl compound, a diisocyanate and a suitable catalyst, optionally in the presence of an adjuvant and a chain-extension compound, which forms a polyurethane in situ.

6. Composite product comprising a concrete outer pipe (1) and an inner pipe (3) made of polymer material, wherein said inner pipe (3) is formed from at least a first layer (3) of polyurethane, the said first layer (3) being in contact with the inner surface (2) of the said concrete pipe (1), **characterised in that** said first layer (3) is made of a non-foamed polyurethane of at least 2 mm in thickness and permeating the pores and
discontinuities of the said concrete to a depth of at least 1 mm.

7. Composite product according to Claim 6, **characterized in that** the said first layer of (3) polyurethane is at least 3 mm in thickness.

8. Composite product according to Claim 6, **characterized in that** the density of the said inner pipe (3) is at least 1,100 kg/m³.

## Patentansprüche

1. Verfahren zur Herstellung eines Polyurethanrohres (3), das fest innerhalb eines Betonrohres (1) verankert ist, durch Aufbringen mindestens einer ersten Schicht (3) aus leckdichtendem Polyurethan, das in der Lage ist, in die Poren des Betons einzudringen, auf die innere Oberfläche (2) des Betonrohres, wobei das Verfahren die folgenden Phasen umfasst:
(a) Drehen des Betonrohres (1) um seine Längsachse bei Umgebungstemperatur;
(b) Einführen einer Mischung aus Polyurethanvorläufern in das sich drehende Rohr (1) in einer Menge, die zur Ausbildung einer ungeschäumten festen Schicht (3) aus Polyurethan ausreicht;
(c) Fortsetzen des Drehens bei Umgebungstemperatur mit einer Geschwindigkeit und für einen Zeitraum, die zur Verfestigung der Mischung ausreichend sind,
**dadurch gekennzeichnet, dass** die ungeschäumte feste Polyurethanschicht mindestens 2 mm dick ist und die Mischung eine Temperatur von weniger als 65°C aufweist.

2. Verfahren gemäss Anspruch 1, **dadurch gekennzeichnet, dass** das Rohr (1) mit einer Randgeschwindigkeit zwischen 1 und 20 m/sek gedreht wird.

3. Verfahren gemäss Anspruch 1 oder 2, **dadurch gekennzeichnet, dass** die Vorläufermischung für das Polyurethan bei Umgebungstemperatur eingebracht wird.

4. Verfahren gemäss mindestens einem der Ansprüche 1 bis 3, **dadurch gekennzeichnet, dass** die Menge der Vorläufermischung zur Ausbildung einer festen Polyurethanschicht von mindestens 3 mm Dicke ausreicht.

5. Verfahren gemäss mindestens einem der Ansprüche 1 bis 4, **dadurch gekennzeichnet, dass** die erste Polymerschicht (3) aus Polyurethan aus einer Mischung, die mindestens eine Polyhydroxylverbindung, ein Diisocyanat und einen geeigneten Katalysator umfasst, gegebenenfalls in Gegenwart eines Hilfsmittels und einer Kettenverlängerungsverbindung gebildet wird, die in situ ein Polyurethan bildet.

6. Kompositprodukt, das ein äusseres Betonrohr (1) und ein Innenrohr (3) aus Polymermaterial umfasst, worin das Innenrohr (3) aus mindestens einer ersten Schicht (3) aus Polyurethan gebildet ist, die erste Schicht (3) ist in Kontakt mit der Innenoberfläche (2) des Betonrohrs (1), **dadurch gekennzeichnet, dass** die erste Schicht (3) aus einem nicht-geschäumten Polyurethan von mindestens 2 mm Dicke besteht, die mindestens 1 mm tief in die Poren und Diskontinuität des Betons eindringt.

7. Kompositprodukt gemäss Anspruch 6, **dadurch gekennzeichnet, dass** die erste Schicht (3) aus Polyurethan mindestens 3 m dick ist.

8. Kompositprodukt gemäss Anspruch 6, **dadurch gekennzeichnet, dass** die Dichte des Innenrohres (3) mindestens 1.100 kg/m³ beträgt.

## Revendications

1. Procédé pour la production d'un tuyau en polyuréthane (3) qui est solidement fixé à l'intérieur d'un tuyau en béton (1), en appliquant, à la surface intérieure (2) dudit tuyau en béton, au moins une première couche (3) de polyuréthane d'étanchéisation qui est capable de s'infiltrer dans les pores du béton, ce procédé comprenant les étapes consistant à :
a) faire tourner ledit tuyau en béton (1) autour de son axe longitudinal à température ambiante ;
b) introduire, dans ledit tuyau rotatif (1), un mélange de précurseurs d'un polyuréthane, dans une quantité qui est suffisante pour former une couche solide non moussée (3) de polyuréthane ;
c) poursuivre ladite rotation, à température ambiante, à une vitesse et pendant une durée qui sont suffisantes pour solidifier ledit mélange,
**caractérisé en ce que** ladite couche solide non moussée de polyuréthane a une épaisseur d'au moins 2 mm, et **en ce que** ledit mélange a une température inférieure à 65°C.

2. Procédé selon la revendication 1, **caractérisé en ce que** ledit tuyau (1) est pivoté à une vitesse périphérique comprise entre 1 et 20 m/s.

3. Procédé selon la revendication 1 ou 2,
**caractérisé en ce que** le mélange de précurseurs dudit polyuréthane est appliqué à température ambiante.

4. Procédé selon l'une quelconque des revendications 1 à 3 précédentes, **caractérisé en ce que** la quantité dudit mélange de précurseurs est suffisante pour former une couche solide de polyuréthane d'une épaisseur d'au moins 3 mm.

5. Procédé selon l'une quelconque des revendications 1 à 4, **caractérisé en ce que** ladite première couche de polymère (3) de polyuréthane est formée à partir d'un mélange comprenant au moins un composé polyhydroxyle, un diisocyanate et un catalyseur adapté, facultativement en présence d'un adjuvant et d'un composé d'extension de chaîne, qui forme un polyuréthane *in situ.*

6. Produit composite comprenant un tuyau extérieur en béton (1) et un tuyau intérieur (3) constitué de matériau polymère, dans lequel ledit tuyau intérieur (3) est formé à partir d'au moins une première couche (3) de polyuréthane, ladite première couche (3) étant en contact avec la surface intérieure (2) dudit tuyau en béton (1), **caractérisé en ce que** ladite première couche (3) est constituée d'un polyuréthane non moussé d'une épaisseur d'au moins 2 mm et s'infiltrant dans les pores et les discontinuités dudit béton à une profondeur d'au moins 1 mm.

7. Produit composite selon la revendication 6, **caractérisé en ce que** ladite première couche (3) de polyuréthane a une épaisseur d'au moins 3 mm.

8. Produit composite selon la revendication 6, **caractérisé en ce que** la masse volumique dudit tuyau intérieur (3) est d'au moins 1100 kg/m³.
